# FASCICULE DE BREVET EUROPEEN

(11) **EP 0 483 015 B1**
(45) Date de publication et mention de la délivrance du brevet: **22.02.1995**
(21) Numéro de dépôt: 91402861.8
(22) Date de dépôt: 25.10.1991
(51) Int. Cl.: B01D 61/46, C25D 21/18

(54) **Cellule électrochimique, notamment pour recyclage d'acide chromique**
Elektrochemische Zelle, insbesondere zur Rückgewinnung von Chromsäure
Electrochemical cell, especially for recycling of chromic acid

(30) Priorité: 26.10.1990 FR 9013283
(43) Date de publication de la demande: 29.04.1992
(73) Titulaire: ELECTRICITE DE FRANCE Service National, 75008 Paris (FR)
(72) Inventeur: Letord, Marie-Marguerite, F-95120 Ermont (FR); Ducourroy, André, F-78290 Croissy s/Seine (FR); Audran, Jacques, F-95370 Montigny les Cormeilles (FR)
(74) Mandataire: Martin, Jean-Jacques

(56) Documents cités:
- EP-A- 0 060 091
- CA-A- 1 057 234
- DE-A- 3 446 329
- FR-A- 1 462 508
- US-A- 2 983 656

## Description

La présente invention concerne d'une façon générale une cellule électrochimique, notamment pour électrodialyse à des fins de reconcentration d'acide chromique, du type comprenant au moins un compartiment cathodique et au moins un compartiment anodique abritant chacun, respectivement, une cathode et une anode et séparés par au moins une membrane échangeuse d'ions.

On connaît, notamment par les brevets US-A-3 948 738 et FR-A-2 348 155, des procédés de reconcentration d'acide chromique. Cependant, aucun de ces documents ne révèle ou ne suggère une construction concrète de cellule pour la mise en oeuvre du procédé. Une cellule correspondant au preamble de la revendication 1 est connue par le brevet FR-A-1 462 508

La présente invention vise à proposer une nouvelle cellule électrochimique, notamment pour électrodialyse en vue du recyclage d'acide chromique, qui soit particulièrement efficace et pratique à utiliser et à entretenir, et dans laquelle en particulier le nettoyage des électrodes soit extrêmement aisé.

Elle concerne à cet effet une cellule électrochimique, notamment pour électrodialyse à des fins de reconcentration d'acide chromique, du type comprenant au moins un compartiment cathodique et au moins un compartiment anodique abritant chacun, respectivement, une cathode et une anode et séparés par au moins une membrane échangeuse d'ions, caractérisée en ce qu'elle est réalisée sous la forme d'un empilement serré de compartiments cathodiques et anodiques, en ce que chaque compartiment est défini par un cadre rigide dont au moins une branche est traversée par une ouverture, et en ce que chaque électrode, fixée sur un support d'électrode, est apte à être montée de façon amovible dans son cadre respectif depuis l'extérieur, à travers ladite ouverture, par fixation étanche de chaque support d'électrode sur le cadre associé.

Des aspects préférés, mais non limitatifs, de la cellule de la présente invention sont exposés ci-dessous:
- il est prévu deux compartiments cathodiques situés de part et d'autre d'un compartiment anodique, et deux membranes situées entre le compartiment anodique et chacun des compartiments cathodiques.
- la ou les anodes sont constituées par une plaque de plomb dopé à l'antimoine, tandis que la ou les cathodes sont constituées par un fil de titane.
- il est prévu entre chaque cadre et chaque membrane adjacente un joint périphérique plat.
- il est prévu sur les faces latérales de chaque cadre des pions de positionnement pour les joints et les membranes adjacents, qui sont pourvus de trous aux emplacements correspondants.
- chaque cadre comporte au voisinage de ses limites en épaisseur des moyens à grille, chaque membrane étant emprisonnée étroitement entre les moyens à grille prévus sur les deux cadres adjacents; les moyens à grille comportent de préférence une pluralité de joncs parallèles disposés verticalement.
- il est prévu dans la partie inférieure de chaque compartiment une rampe inclinée dont l'extrémité basse débouche sur un passage d'évacuation de boues traversant le cadre associé dans sa région inférieure.
- les moyens à grille et la rampe inclinée sont constitués par un élément commun fixé dans l'espace intérieur du cadre.
- chaque support d'électrode est constitué par un couvercle de dimensions sensiblement identiques à celles de la face extérieure de la branche du cadre comportant l'ouverture, un joint d'étanchéité étant prévu entre ledit couvercle et ladite face extérieure et entourant l'ouverture.
- Si les moyens de fixation étanche comprennent des moyens pour excercer une pression localisée sur le couvercle, alors ledit couvercle comporte en outre un élément rigide de répartition des contraintes sur lequel s'applique ladite pression.
- chaque électrode comporte une barre de connexion électrique traversant de façon étanche ledit couvercle.
- la cellule est formée dans une presse à vérin comportant un plateau fixe et un plateau mobile sollicité par un vérin, lesdits plateaux et ledit vérin étant montés articulés sur un axe essentiellement horizontal.
- il est prévu dans la région inférieure de chaque compartiment une canne de distribution comprenant un tube percé d'une pluralité de trous et permettant de répartir le milieu électrolytique dans ledit compartiment.

D'autres aspects, buts et avantages de la présente invention apparaîtront mieux à la lecture de la description détaillée suivante d'une forme de réalisation préférée de celle-ci, donnée à titre d'exemple non limitatif et faite en référence au dessin annexé, sur lequel :
la figure 1 est une vue en perspective éclatée d'une partie d'une cellule électrochimique selon l'invention,
la figure 2 est une vue en perspective éclatée d'une autre partie, incorporant une électrode, de la cellule,
la figure 3 est une vue en perspective d'un autre type d'électrode utilisé dans la cellule,
la figure 4 est une vue en coupe transversale, schématique et éclatée, d'une cellule complète réalisée selon l'invention,
la figure 5 est une vue en élévation de côté d'un appareillage expérimental pour le montage de la cellule,
la figure 6 est un schéma hydraulique simplifié d'une installation de reconcentration d'acide chromique incorporant une cellule selon la présente invention, et
la figure 7 est un schéma d'une chaîne de chromage incorporant une cellule électrochimique selon l'invention.

On indiquera tout d'abord que, d'une figure à l'autre, des éléments ou parties identiques ou similaires sont désignés par les mêmes numéros de référence.

La cellule électrochimique qui va être décrite ci-dessous est une cellule d'électrodialyse conçue pour le recyclage (reconcentration) d'acide chromique.

Un tel procédé de recyclage est connu par exemple d'après US-A-3 948 738 et d'après FR-A-2 348 155.

La cellule comporte deux compartiments cathodiques, contenant chacun une cathode en fil de titane, un compartiment anodique contenant une électrode en plomb dopé à l'antimoine, et situé entre les deux compartiments cathodiques, ainsi que deux membranes échangeuses d'ions séparant le compartiment anodique de chacun des deux compartiments cathodiques. Les compartiments cathodiques et anodique présentent ici la même construction.

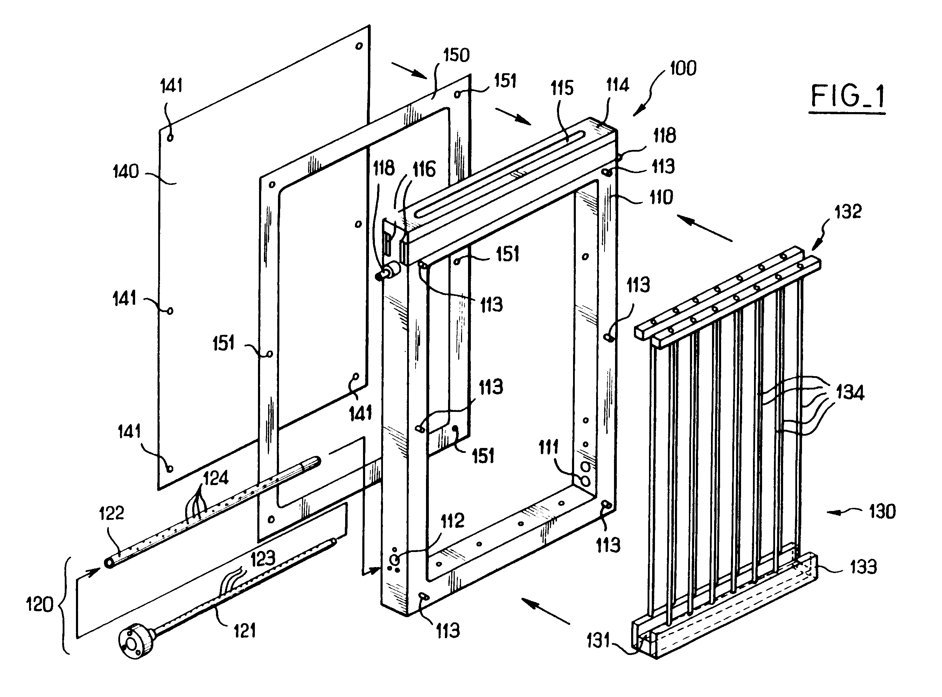

En référence maintenant à la figure 1, chaque compartiment 100 comporte un cadre 110, réalisé par exemple en polychlorure de vinyle, équipé de raccords de sortie 118 pour les fluides, lesquels circulent à co-courant. L'entrée de fluide est réalisée par une canne de distribution 120, réalisée sous la forme de deux tubes concentriques 121, 122 percés d'une pluralité de trous 123, 124, est située dans la partie inférieure du cadre. On assure ainsi une répartition régulière des milieux dans chacun des compartiments.

Les boues d'hydroxydes métalliques s'accumulent au fond de la cellule, et leur récupération est facilitée par une rampe inclinée 131 prévue dans la région inférieure de chaque cadre, en étant en l'espèce incorporée à un élément 130 vissé à l'intérieur du cadre comme on le verra en détail plus loin. La rampe inclinée 131 débouche à sa partie inférieure sur une ouverture d'évacuation des boues 111 prévue à la base de l'un des montants du cadre. Cette ouverture 111 est située dans le coin opposé à l'ouverture 112 prévue dans le cadre pour la mise en place de la canne de distribution.

Comme on l'a indiqué, chaque compartiment est séparé de son voisin par une membrane échangeuse d'anions, respectivement 140, dont le contour coïncide avec le contour extérieur des cadres. Des pions de positionnement 113 sont prévus sur chaque cadre et, en coopérant avec des trous 141 formés dans chaque membrane, assurent le bon positionnement de celles-ci.

Il est en outre prévu, entre chaque membrane et chaque cadre adjacent, un joint d'étanchéité périphérique 150, de forme plate, réalisé par exemple en polychlorure de vinyle. Les joints sont également pourvus de trous 151 coopérant avec les pions 113 pour leur bon positionnement sur les cadres adjacents.

Par ailleurs, afin d'éviter que les membranes ne forment des ventres pénétrant dans l'un des compartiments adjacents sous l'effet d'une pression différentielle, il est prévu une grille (l'élément 130 sus-mentionné) comportant une traverse supérieure 132 et une traverse inférieure 133 (de section en U et comportant en son centre la rampe inclinée 131), entre lesquelles s'étendent une pluralité de joncs rectilignes 134, constitués de préférence par une âme métallique et un gainage en polychlorure de vinyle. La grille 130 peut être fixée dans l'espace intérieur du cadre par exemple par des vis.

Selon un aspect essentiel de la présente invention, les électrodes de la cellule peuvent être démontées sans avoir à complètement démanteler l'empilement constitué par les compartiments, les membranes et les joints.

Ainsi il est prévu dans la traverse supérieure 114 du cadre 110 une ouverture traversante oblongue 115, dirigée de haut en bas, permettant comme on va le voir plus loin la mise en place et le retrait des électrodes. Afin de bien résister à l'effort de compression imparti à l'empilement lorsqu'une électrode est retirée, la traverse 114 est par ailleurs renforcée par deux plaques 116, par exemple en acier inoxydable, noyées dans celle-ci et s'étendant sur toute sa longueur de part et d'autre de l'ouverture 115. On limite ainsi le rétreint de ladite ouverture, dû à la pression de serrage, lorsque l'électrode correspondante est retirée.

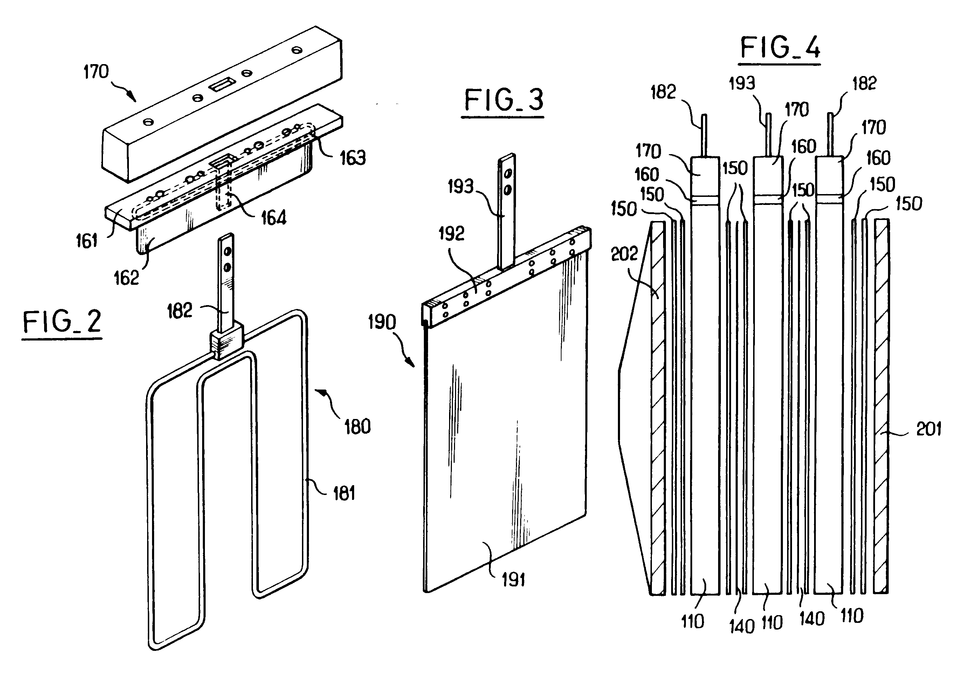

Maintenant en référence à la figure 2, à chaque électrode est associé un couvercle porte-électrode constitué de deux éléments, respectivement 160 et 170. L'élément inférieur 160 est réalisé en polychlorure de vinyle, et comporte une première partie 161, rectangulaire, destinée à venir s'appliquer contre la surface supérieure de la traverse 114 du cadre 110. Une gorge ovale est pratiquée dans la surface inférieure de la partie 161 et reçoit un joint torique d'étanchéité 163. La seconde partie 162 de l'élément 160 a une forme complémentaire de celle de l'ouverture 115, et est destinée à venir y prendre place. Par ailleurs, l'élément 160 est traversé centralement par un passage 164 de section rectangulaire, destiné au passage d'une barre de connexion électrique (décrite plus loin) de l'électrode associée.

L'élément supérieur 170 est réalisé sous la forme d'un profilé métallique creux monté sur l'élément inférieur 160 par exemple à l'aide de vis. Pour maintenir le couvercle d'électrode 160, 170 fixé de façon étanche contre le cadre 110, on peut utiliser par exemple des moyens (non illustrés) pour appliquer localement une pression sur la face supérieure du profilé 170. Dans ce cas, ce dernier permet avantageusement de répartir sur la longueur du joint 163 la force appliquée.

On a représenté sur la figure 2 la configuration d'une cathode 180. Elle est ici constituée par un fil de titane 181 dont les deux extrémités sont reliées, dans la région supérieure de la cathode, à une barre de connexion électrique 182 destinée à traverser les deux éléments de couvercle 160, 170 pour le raccordement à une source de courant électrique.

L'anode est représentée sur la figure 3 et désignée par la référence 190. elle peut s'adapter sur un couvercle 160, 170 identique à celui qui a été décrit en référence à la figure 2, et sur un cadre tel qu'il a été décrit en référence à la figure 1. L'anode est ici constituée par une plaque 191 de plomb dopé à 3 à 4% d'antimoine, reliée à une barre de connexion électrique 193 par l'intermédiaire d'une pièce 192 formant pince.

En référence maintenant à la figure 4, une cellule d'électrodialyse selon l'invention est réalisée par un empilage entre une plaque mobile 201 et une plaque fixe 202 d'une presse. On trouve successivement, de la droite vers la gauche sur cette figure, la plaque mobile 201, deux joints plats 150, 150, un compartiment cathodique, dont on observe le cadre 110 et abritant une cathode 180, un joint plat 150, une membrane 140, un joint plat 150, un compartiment anodique abritant une anode 190, un joint plat 150, une membrane 140, un joint plat 150, le second compartiment cathodique avec cathode 180, deux joints plats 150, 150 et la plaque fixe 202 de la presse.

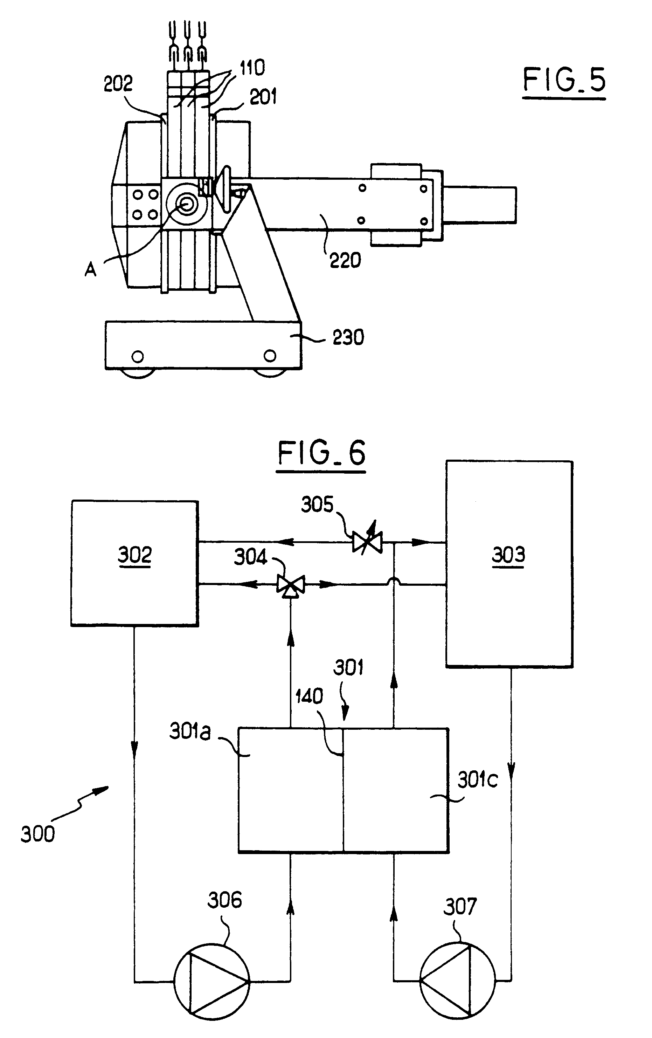

En référence maintenant à la figure 5, on a illustré schématiquement un appareil expérimental permettant de mettre la cellule en condition de travail. Cet appareillage comporte essentiellement un ensemble mobile comportant un vérin 220 agissant sur la plaque mobile 201, ladite plaque mobile 201 et la plaque fixe 202, cet ensemble étant monté de façon articulée autour d'un axe horizontal A sur un chariot 230. La position illustrée est la position opérationnelle, les divers compartiments de la cellule ayant une orientation verticale.

Pour mettre en service la cellule selon l'invention, l'ensemble mobile est pivoté autour de l'axe A pour que les plaques 201, 202 soient horizontales. La plaque mobile 201 est relevée par l'intermédiaire du vérin. On effectue alors l'empilement à l'horizontale, puis on manoeuvre le vérin pour abaisser la plaque mobile 201 afin de réaliser le serrage de l'empilement avec la force requise pour assurer une bonne étanchéité, puis on fait pivoter la cellule autour de l'axe A pour que les compartiments prennent une orientation verticale comme représenté sur la figure 5; on introduit alors dans lesdits compartiments les électrodes respectives équipées de leur couvercle porte-électrode, on fixe avec pression les couvercles sur les cadres respectifs, par des moyens non illustrés, et enfin on raccorde la cellule au reste de l'installation par des canalisations souples appropriées.

Grâce à la structure de cellule de la présente invention, il est aisé dans cette situation de démonter les électrodes à tout moment, sans relâcher la pression exercée par le vérin et donc sans avoir à démanteler l'empilement. Il suffit en effet, après avoir pris soin de supprimer toute pression de fluide à l'intérieur des compartiments, de libérer les couvercles des électrodes et de faire glisser ces dernières, fixées à leur couvercle, hors de leur compartiment respectif. Les opérations notamment de nettoyage sur la cellule sont ainsi grandement facilitées. En outre, on peut aussi facilement utiliser des électrodes constituées en des matériaux différents en vue d'utiliser la cellule dans d'autres types d'applications.

En référence maintenant à la figure 6, on a illustré schématiquement une telle installation, indiquée globalement en 300. Elle comprend, outre la cellule décrite ci-dessus, désignée par la référence 301 et dont on a représenté schématiquement le compartiment anodique 301a et les compartiments cathodiques 301c séparés par la membrane 140, un réservoir d'anolyte 302, un réservoir de catholyte 303, une vanne à deux voies 304, une vanne réglable 305 et deux pompes 306 et 307.

L'entrée du compartiment anodique 301a est reliée à la sortie de la pompe 306, dont l'entrée est reliée au réservoir d'anolyte 302. La sortie du compartiment anodique 301a est reliée à l'entrée de la vanne 304, dont une première sortie est reliée au réservoir d'anolyte 302 et dont une seconde sortie est reliée au réservoir de catholyte 303. L'autre pompe 307 alimente les compartiments cathodiques 301c à partir du réservoir de catholyte 303, la sortie desdits compartiments 301c étant reliée d'une part directement au réservoir de catholyte 303, et d'autre part, par l'intermédiaire de la vanne simple 305, au réservoir d'anolyte 302.

Les diverses tuyauteries et robinetteries peuvent être réalisées en polychlorure de vinyle. On peut prévoir par ailleurs, de façon non illustrée, des sondes de température en tout emplacement approprié, ainsi qu'une mesure des débits par des débit-mètres à flotteur.

Dans le présent exemple, l'installation fonctionne en traitement par lots, les concentrations des solutions dans les circuits d'anolyte et de catholyte évoluant au cours du temps et étant suivies par exemple par chromatographie ionique et par dosage volumétrique.

Une telle installation peut fonctionner dans un premier mode aux fins de reconcentration de l'anolyte. Dans ce cas, la vanne 304 dirige la sortie du compartiment anodique vers le réservoir d'anolyte 302, tandis que la vanne 305 est fermée.

Un second mode de fonctionnement est destiné à la régénération, au cours de laquelle les solutions d'anolyte et de catholyte sont mélangées afin de réoxyder le CrIII en CrVI lors du passage dans le compartiment anodique 301a de la cellule. Dans ce cas, la vanne 304 dirige la sortie du compartiment anodique vers le réservoir de catholyte 303, tandis que la vanne 305 est ouverte.

Un tel fonctionnement à deux modes est avantageux en ce qu'il permet de laisser les électrodes sous tension et d'éviter qu'une consommation importante de solution ait lieu pour chaque reconcentration effectuée. On évite également de cette manière les fluctuations de température et les contraintes sévères liées à la préparation répétée de quantités importantes de solutions, notamment pour le circuit cathodique.

Par exemple, avec une cuve d'anolyte d'une contenance de 100 litres et une cuve de catholyte d'une contenance de 590 litres, un débit d'anolyte de 1 m³/heure et un débit de catholyte de 2 m³/heure, on peut prévoir un fonctionnement en mode reconcentration pendant environ 5 jours et un fonctionnement en mode régénération pendant environ 3 jours.

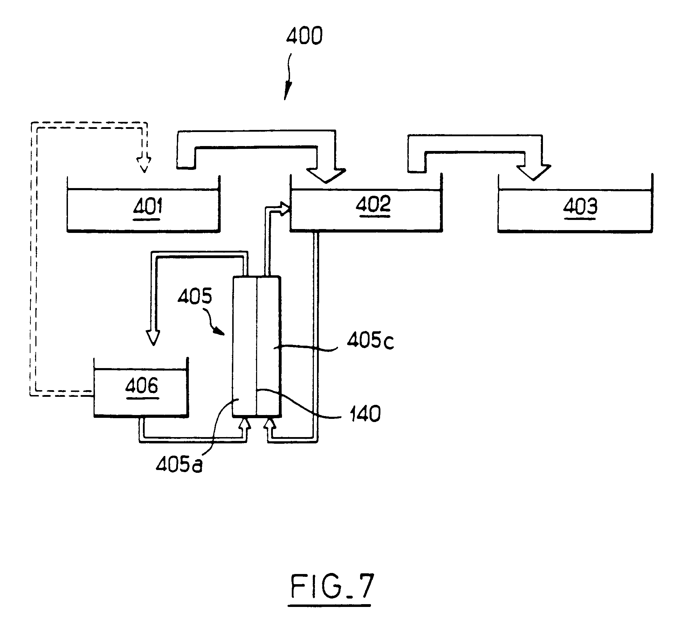

On va maintenant décrire en référence à la figure 7 une chaîne de chromage industrielle incorporant une cellule de reconcentration selon l'invention.

Classiquement, la chaîne de chromage, désignée globalement par la référence 400, comprend un bain de chromage 401 (bain de dépôt) suivi d'un bain de rinçage statique 402 (bain mort) lui-même suivi d'un bain de rinçage courant 403.

En 405 est désignée la cellule électrochromique, qui comprend des compartiments cathodique et anodique 405c et 405a séparés par une membrane 140. Le compartiment cathodique 405c est de préférence relié directement au bain de rinçage statique 402, pour assurer la récupération de chrome en continu. En revanche, l'anolyte emprunte de préférence un circuit totalement isolé du bain de chromage, de manière à éviter toute pollution dudit bain de chromage dans le cas où le catholyte viendrait à polluer l'anolyte par exemple en cas de déchirement accidentel de la membrane.

Ainsi il est prévu une cuve tampon 406 reliée en continu au compartiment anodique 405a de la cellule. Périodiquement, on puise dans cette cuve tampon de l'anolyte pour recharger le bain de chromage 401.

L'homme de l'art saura réaliser concrètement une telle installation en incorporant les moyens hydrauliques (vannes, pompes) et de contrôle appropriés.

En particulier, une cellule réalisée conformément à la présente invention peut comporter un nombre quelconque de compartiments cathodiques et anodiques alternés. Elle peut par ailleurs être utilisée pour des applications toutes autres que le recyclage d'acide chromique.

## Revendications

1. Cellule électrochimique, notamment pour électrodialyse à des fins de reconcentration d'acide chromique, du type comprenant au moins un compartiment cathodique (100) et au moins un compartiment anodique (100) abritant chacun, respectivement, une cathode (180) et une anode (190) et séparés par au moins une membrane (140) échangeuse d'ions, caractérisée en ce qu'elle est réalisée sous la forme d'un empilement serré de compartiments cathodiques (100) et anodiques (100), en ce que chaque compartiment (100) est défini par un cadre rigide (110) dont au moins une branche (114) est traversée par une ouverture (115) et en ce que chaque électrode (180, 190), fixée sur un support d'électrode (160, 170), est apte à être montée de façon amovible dans son cadre (110) respectif depuis l'extérieur, à travers ladite ouverture, par fixation étanche de chaque support (160, 170) d'électrode sur le cadre associé.

2. Cellule selon la revendication 1, caractérisée en ce qu'il est prévu deux compartiments cathodiques situés de part et d'autre d'un compartiment anodique, et deux membranes (140) situées entre le compartiment anodique et chacun des compartiments cathodiques.

3. Cellule selon l'une des revendications 1 et 2, caractérisée en ce que la ou les anodes sont constituées par une plaque (191) de plomb dopé à l'antimoine.

4. Cellule selon l'une des revendications 1 à 3, caractérisée en ce que la ou les cathodes sont constituées par un fil de titane (181).

5. Cellule selon l'une des revendications 1 à 4, caractérisée en ce qu'il est prévu entre chaque cadre et chaque membrane adjacente un joint périphérique plat (150).

6. Cellule selon la revendication 5, caractérisée en ce qu'il est prévu sur les faces latérales de chaque cadre des pions de positionnement (113) pour les joints et les membranes adjacents, qui sont pourvus de trous (151, 141) aux emplacements correspondants.

7. Cellule selon l'une des revendications 1 à 6, caractérisée en ce que chaque cadre comporte au voisinage de ses limites en épaisseur des moyens à grille (130, 134), chaque membrane étant emprisonnée étroitement entre les moyens à grille prévus sur les deux cadres adjacents.

8. Cellule selon la revendication 7, caractérisée en ce que les moyens à grille comportent une pluralité de joncs parallèles (134) disposés verticalement.

9. Cellule selon l'une des revendications 1 à 8, caractérisée en ce qu'il est prévu dans la partie inférieure de chaque compartiment une rampe inclinée (131) dont l'extrémité basse débouche sur un passage d'évacuation de boues (111) traversant le cadre associé dans sa région inférieure.

10. Cellule selon la revendication 9, elle-même dépendant de l'une des revendications 7 et 8, caractérisée en ce que les moyens à grille et la rampe inclinée sont constitués par un élément commun (130) fixé dans l'espace intérieur du cadre.

11. Cellule selon l'une des revendications 1 à 10, caractérisée en ce que chaque support d'électrode est constitué par un couvercle (160) de dimensions sensiblement identiques à celles de la face extérieure de la branche (114) du cadre comportant l'ouverture, un joint d'étanchéité (163) étant prévu entre ledit couvercle et ladite face extérieure et entourant l'ouverture.

12. Cellule selon la revendication 11, caractérisée en ce que les moyens de fixation étanche comprennent des moyens pour excercer une pression localisée sur le couvercle et en ce que ledit couvercle comporte en outre un élément rigide (170) de répartition des contraintes sur lequel s'applique ladite pression.

13. Cellule selon l'une des revendications 11 et 12, caractérisée en ce que chaque électrode comporte une barre de connexion électrique (182; 193) traversant de façon étanche ledit couvercle.

14. Cellule selon l'une des revendications précédentes, caractérisée en ce qu'elle est formée dans une presse à vérin comportant un plateau fixe (202) et un plateau mobile (201) sollicité par un vérin (220), lesdits plateaux et ledit vérin étant montés articulés sur un axe (A) essentiellement horizontal.

15. Cellule selon l'une des revendications précédentes, caractérisée en ce qu'il est prévu dans la région inférieure de chaque compartiment une canne de distribution (120) comprenant un tube percé d'une pluralité de trous et permettant de répartir le milieu électrolytique dans ledit compartiment.

## Claims

1. An electrochemical cell, especially for electro-dialysis for recycling chromic acid, the cell being of the type comprising at least one cathode compartment (100) and at least one anode compartment (100), respectively containing a cathode (180) and an anode (190) and being separated by at least one ion exchange membrane (140), characterized in that the cell is implemented in the form of a close-packed stack of cathode (100) and anode (100) compartments, in that each compartment (100) is defined by a rigid frame (110) of which at least one side (114) has an opening (115) therethrough, and in that each electrode (180, 190), fixed on an electrode support (160, 170), is adapted to be removably mounted in its respective frame (110) from the outside, through the said opening, by each electrode support (160, 170) being fixed in sealed manner to the associated frame.

2. A cell according to claim 1, characterized in that two cathode compartments are located on either side of an anode compartment, and two membranes (14) are situated between the anode compartment and the two cathode compartments respectively.

3. A cell according to claim 1 or 2, characterized in that the anode(s) are formed by a plate (191) of antimony-doped lead.

4. A cell according to any one of claims 1 to 3, characterized in that the cathode(s) are formed by a titanium wire (181).

5. A cell according to any one of claims 1 to 4, characterized in that there is a flat peripheral gasket (150) between each frame and each adjacent membrane.

6. A cell according to claim 5, characterized in that positioning lugs (113) are provided on the side faces of each frame for the gaskets and the adjacent membranes, which are provided with holes (151, 141) in corresponding locations.

7. A cell according to any one of claims 1 to 6, characterized in that each frame has screen means (130, 134) within its thickness, each membrane being trapped tightly between the screen means provided on the two adjacent frames.

8. A cell according to claim 7, characterized in that the screen means comprise a plurality of vertically disposed, parallel rods (134).

9. A cell according to any one of claims 1 to 8, characterized in that an inclined ramp (131) is provided in the lower part of each compartment, the lower end of the ramp opening into a passage (111) for removal of sludge passing through the associated frame in its lower region.

10. A cell according to claim 9, insofar as dependent on claim 7 or 8, characterized in that the screen means and the inclined ramp are formed by a common part (130) fixed in the space inside the frame.

11. A cell according to any one of claims 1 to 10, characterized in that each electrode support is composed of a cover (160) with dimensions substantially identical to those of the outer face of the side (114) of the frame with the opening, a sealing gasket (163) being provided between the said cover and the said outer face and surrounding the opening.

12. A cell according to claim 11, characterized in that the sealed fixing means comprise means for applying local pressure to the cover and in that the said cover further comprises a rigid member (170) for distributing the load, to which the said pressure is applied.

13. A cell according to claims 11 and 12, characterized in that each electrode comprises an electrical connection bar (182; 193) passing through the said cover in sealed manner.

14. A cell according to any one of the preceding claims, characterized in that it is formed in a screw press comprising a fixed platen (202) and a movable platen (201) actuated by a screw (220), the said platens and the said screw being pivoted about a substantially horizontal axis (A).

15. A cell according to any one of the preceding claims, characterized in that a distribution pipe (120) is provided in the lower region of each compartment, comprising a tube pierced by a plurality of holes to allow distribution of the electrolytic medium in the said compartment.

## Patentansprüche

1. Elektrochemische Zelle, insbesondere für die Elektrodialyse zum Aufkonzentrieren von Chromsäure, der mindestens einen Kathodenraum (100) und mindestens einen Anodenraum (100), in denen jeweils eine Kathode (180) bzw. eine Anode (190) untergebracht sind und die durch mindestens eine Ionenaustauschermembran getrennt sind, umfassenden Art, dadurch gekennzeichnet, daß sie in Form eines zusammengespannten Stapels von Kathoden(100)- und Anodenräumen (100) ausgeführt ist, daß jeder Raum (100) von einem starren Rahmen (110) begrenzt ist, von welchem mindestens ein Zweig (114) von einer Öffnung (115) durchsetzt ist, und daß jede an einem Elektrodenhalter (160, 170) befestigte Elektrode (180, 190) von außen durch besagte Öffnung hindurch mittels dichter Befestigung jedes Elektrodenhalters (160, 170) am zugehörigen Rahmen an ihrem entsprechenden Rahmen (110) lösbar montiert werden kann.

2. Zelle nach Anspruch 1, dadurch gekennzeichnet, daß zwei zu beiden Seiten eines Anodenraums befindliche Kathodenräume und zwei zwischen dem Anodenraum und jedem der Kathodenräume angeordnete Membranen (140) vorgesehen sind.

3. Zelle nach einem der Ansprüche 1 und 2, dadurch gekennzeichnet, daß die Anode(n) aus einer mit Antimon dotierten Bleiplatte (191) besteht bzw. bestehen.

4. Zelle nach einem der Ansprüche 1 bis 3, dadurch gekennzeichnet, daß die Kathode(n) aus einem Titandraht (181) besteht bzw. bestehen.

5. Zelle nach einem der Ansprüche 1 bis 4, dadurch gekennzeichnet, daß zwischen jedem Rahmen und jeder danebenliegenden Membran eine flache umlaufende Dichtung (150) vorgesehen ist.

6. Zelle noch Anspruch 5, dadurch gekennzeichnet, daß auf den Seitenflächen jedes Rahmens Positionierstifte (113) für die Dichtungen und danebenliegenden Membranen vorgesehen sind, die an den entsprechenden Stellen mit Löchern (151, 141) versehen sind.

7. Zelle nach einem der Ansprüche 1 bis 6, dadurch gekennzeichnet, daß jeder Rahmen nahe den Enden seiner Dicke Gittereinrichtungen (130, 134) aufweist, wobei jede Membran zwischen den auf den beiden danebenliegenden Rahmen vorgesehenen Gittereinrichtungen eng eingeschlossen ist.

8. Zelle nach Anspruch 7, dadurch gekennzeichnet, daß die Gittereinrichtungen eine Mehrzahl paralleler, senkrecht angeordneter Stege (134) aufweisen.

9. Zelle nach eine der Ansprüche 1 bis 8, dadurch gekennzeichnet, daß im unteren Teil jedes Raums eine geneigte Rampe (131) vorgesehen ist, deren unteres Ende in einen den unteren Bereich des zugehörigen Rahmens durchsetzenden Schlammabzugskanal (111) ausläuft.

10. Zelle nach dem seinerseits von einem der Ansprüche 7 und 8 abhängigen Anspruch 9, dadurch gekennzeichnet, daß die Gittereinrichtungen und die geneigte Rampe aus eine gemeinsamen, im Innenraum des Rahmens befestigten Glied (130) bestehen.

11. Zelle nach einem der Ansprüche 1 bis 10, dadurch gekennzeichnet, daß jeder Elektrodenhalter aus einer Abdeckung (160) mit Abmessungen, die im wesentlichen identisch mit denen der Außenfläche des die Öffnung enthaltenden Zweigs (114) des Rahmens sind, besteht, wobei zwischen besagter Abdeckung und besagter Außenfläche eine die Öffnung umgebende Dichtung (163) vorgesehen ist.

12. Zelle nach Anspruch 11, dadurch gekennzeichnet, daß die Vorrichtungen zur dichten Befestigung aus Vorrichtungen zum Ausüben eines lokalisierten Drucks auf die Abdeckung bestehen und daß besagte Abdeckung außerdem ein starres Glied (170) zur Spannungsverteilung enthält, auf welches besagter Druck einwirkt.

13. Zelle nach einem der Ansprüche 11 und 12, dadurch gekennzeichnet, daß jede Elektrode eine dicht durch besagte Abdeckung hindurchgehende Schiene (182; 193) zur elektrischen Verbindung aufweist.

14. Zelle nach einem der vorhergehenden Ansprüche, dadurch gekennzeichnet, daß sie in einer Schraubenpresse mit einer feststehenden Platte (202) und einer von einer Schraube (220) vorgetriebenen, beweglichen Platte (201) gebildet wird, wobei besagte Platten und besagte Schraube gelenkig auf einer im wesentlichen horizontalen Achse (A) montiert sind.

15. Zelle nach einem der vorhergehenden Ansprüche, dadurch gekennzeichnet, daß im unteren Bereich jedes Raums ein Verteilerrohr (120) vorgesehen ist, welches aus einer mit einer Mehrzahl von Löchern durchbohrten Röhre besteht und es ermöglicht, das elektrolytische Medium in besagtem Raum zu verteilen.
